# EUROPÄISCHE PATENTSCHRIFT

(11) **EP 2 304 292 B1**
(45) Veröffentlichungstag und Bekanntmachung des Hinweises auf die Patenterteilung: **30.04.2014**
(21) Anmeldenummer: 09768952.5
(22) Anmeldetag: 19.06.2009
(51) Int. Cl.: F16K 99/00, B01L 3/00

(54) **MIKROVENTIL ZUR VERWENDUNG IN EINEM MIKROFLUIDIKSYSTEM SOWIE VERFAHREN ZU DESSEN HERSTELLUNG**
MICRO-VALVE FOR USE IN A MICROFLUIDIC SYSTEM, AND METHOD FOR THE PRODUCTION THEREOF
MICROVANNE DESTINÉE À UN MICROSYSTÈME FLUIDIQUE, AINSI QUE SON PROCÉDÉ DE FABRICATION

(30) Priorität: 26.06.2008 DE 102008002674
(43) Veröffentlichungstag der Anmeldung: 06.04.2011
(73) Patentinhaber: Fraunhofer Gesellschaft zur Förderung der angewandten Forschung e.V., 80686 München (DE)
(72) Erfinder: SCHAEFFER, Eva, 55118 Mainz (DE); STEIN, Volkmar, 65462 Ginsheim-Gustavsburg (DE)
(74) Vertreter: Mehler Achler
(86) Internationale Anmeldenummer: PCT/EP2009/004456
(87) Internationale Veröffentlichungsnummer: WO 2009/156103

(56) Entgegenhaltungen:
- EP-A- 1 350 759
- WO-A-2008/053751
- US-A1- 2003 152 489
- HASEGAWA ET AL: "Multi-directional micro-switching valve chip with rotary mechanism" SENSORS AND ACTUATORS A, ELSEVIER SEQUOIA S.A., LAUSANNE, CH, Bd. 143, Nr. 2, 12. November 2007 (2007-11-12), Seiten 390-398, XP022576763 ISSN: 0924-4247 in der Anmeldung erwähnt

## Beschreibung

Die Erfindung betrifft ein Mikroventil zur Steuerung von Fluidströmen in einem Mikrofluidiksystem, insbesondere in einem Lab-On-a-Chip-System sowie ein Verfahren zu deren Herstellung. Das Mikroventil weist ein Substrat mit einer Dichtfläche und einen relativ zu dem Substrat beweglich angeordneten Ventilkörper auf, der eine Dichtfläche aufweist und wenigstens einen Kanal zur wahlweisen Verbindung und/oder Trennung von Fluidleitungen in dem Substrat definiert, wobei die Dichtfläche des Ventilkörpers und die Dichtfläche des Substrats fluiddicht aneinander anliegen. Die Erfindung betrifft ferner einen Probenaufbereitungschip mit einem solchen Mikroventil.

Ein Probenaufbereitungschip im Sinne dieser Erfindung ist ein mikrofluidisches System zur chemischen und biochemischen Analytik und/oder Synthese, beispielsweise für so genannte Point-of-Care-Anwendungen. Diese mikrofluidischen Systeme werden auch als Lab-on-a-Chip bezeichnet.

Mikroventile der eingangs genannten Art sind bekannt. Beispielhaft wird auf die Offenlegungsschrift DE 102 27 593 A1, das Patent US 6,748,975 B2, die Patentanmeldung WO 2008/053751 A und den Aufsatz "10-Way micro switching valve Chip for multi-directional flow control", Tadahiro Hasegawa et al, 7th International Conference on Miniaturized Chemical and Biochemical Analysis Systems, 5. - 9. Oktober 2003, Squaw Valley, California USA hingewiesen.

Aus der DE 102 27 593 A1 ist beispielsweise ein Mikroventil bekannt, welches ein Substrat und eine Abdeckplatte als Ventilkörper aufweist, die in fluiddichtem Kontakt aufeinander liegende Kontaktflächen aufweisen und derart zueinander positionierbar sind, dass Fluidleitungen wahlweise verbunden oder getrennt werden können. Das Mikroventil ist entweder als Drehventil mit einer zylinderförmigen Abdeckplatte oder als Schiebeventil mit einer rechteckigen Abdeckplatte offenbart. Als Substrat- und Abdeckplattenmaterial werden bevorzugt polymere Materialien und wahlweise Verbundwerkstoffe vorgeschlagen.

Die vorliegende Erfindung befasst sich mit der Frage, wie bei derartigen Mikroventilen eine einfache und funktionssichere Verbindung von dem Ventilkörper zu dem Substrat geschaffen werden kann. Da die eingangs bezeichneten Mikrofluidiksysteme und insbesondere die Lab-On-a-Chip-Systeme in der Regel für die Einmal-Verwendung konzipiert sind, ist eine kostengünstige Lösung erstrebenswert. Hierfür bietet die DE 102 27 593 A1 keine Anhaltspunkte.

In der US 6,748,975 B2 ist ein Drehventil offenbart, welches aus einem relativ zu dem Substrat (oder Stator) drehbaren Ventilkörper (oder Rotor) gebildet wird. Der Rotor ist zwischen zwei oder mehreren Ventilstellungen drehbar, in welchen einer oder mehrere Kanäle in dem Rotor wahlweise eine oder mehrere Einlassöffnungen mit einer oder mehreren Auslassöffnungen verbindet oder diese trennt. Der Rotor liegt mit einer Kontaktfläche auf einer entsprechenden Kontaktfläche des Stators auf. Die Position des Rotors bezüglich des Stators wird durch Einsetzen beider Elemente in ein Ventilgehäuse definiert, welches außer dem Rotor und dem Stator diverse Mittel zum Andrücken und Betätigen des Ventils einschließt. Zwar sind in diesem Fall der Rotor und der Stator lose Einzelteile, die zum Einmalgebrauch geeignet scheinen. Jedoch ist ein erheblicher Aufwand zum Zusammenbau des funktionsfähigen Ventils erforderlich und somit die Handhabung des Ventils erschwert.

Aus der WO 2008/053751 A ist eine Drehventilanordnung für einen Reagenzgefäßboden mit einer Dichtplatte, einer oberen und einer unteren Rotorplatte und einem Verschluss bekannt. Über die Verbindung der Elemente ist in der Schrift nichts wieter ausgesagt.

Auch in dem oben genannten Aufsatz von Hasegawa et al. ist ein Drehventil bestehend aus einem Substrat und einem drehbaren Ventilkörper gezeigt, welche mit ihren Kontaktflächen auf einander liegen. Der Ventilkörper wird aus einem Silikongummiring mit eingearbeiteten Kanälen gebildet, der mittels einer aus wenigstens vier Teilen bestehenden Mechanik einschließlich einer Andrückfeder gegen das Substrat angedrückt wird. Wie genau die Andrückfeder gegen das Substrat abgestützt ist, ist aus dem Aufsatz nicht ersichtlich. Auch hier ist anzunehmen, dass ein umgebendes Ventilgehäuse vorgesehen ist, welches die Ventilanordnung aufnimmt.

Die Schrift US 2003/152489 A1 offenbart einen Schaltblock zur Verbindung mit mehreren Reaktionsgefäßen, bei denen zwischen zwei Platten mehrere Gleitelemente zur wahlweisen Verbindung von Fluidkanälen eingeschlossen sind, die von einem gemeinsamen Antrieb bewegt werden. Die beiden Platten sind miteinander verschweißt.

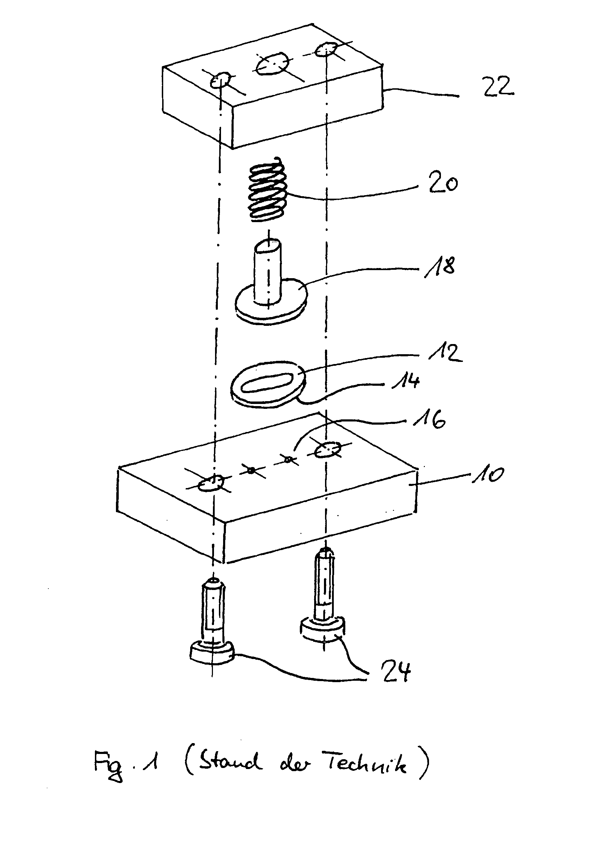

Die Anmelderin selbst hat auf der Konferenz "MipTec - The 9th International Conference and Exhibition on Drug Discovery" am 9. Mai 2006 bereits Mikroventilanordnungen mit einem Substrat 10 und einem Ventilkörper 12 der gattungsgemäßen Art vorgestellt, wie Sie nachfolgend anhand der Figur 1 beschrieben sind. Der Ventilkörper 12 ist in Form einer Elastomerdichtung ausgebildet und wird mit seiner Kontakt- oder Dichtfläche 14 gegen eine entsprechende Kontakt- oder Dichtfläche 16 des Substrats 10 mittels eines Ventilzylinders 18 angedrückt. Der Ven-tilzylinder 18 ist in Form eines Stempels ausgebildet und wird mittels einer Druckfeder 20 mit einer Druckkraft beaufschlagt. Die Druckfeder 20 stützt sich wiederum gegenüber einem Gehäuse 22 ab, welches mittels einer Schraubverbindung 24 direkt auf das Substrat 10 aufgeschraubt ist. Die Mikroventilanordnung gemäß Figur 1 ist zwar verglichen mit dem vorgenannten Stand der Technik von einfachem Aufbau. Dennoch werden eine Vielzahl unterschiedlicher Materialien und Komponenten benötigt und der einmalige Zusammenbau gestaltet sich in der Praxis noch immer für eine Massenfertigung zu aufwendig.

Aufgabe der vorliegenden Erfindung ist es demgemäß, ein Mikroventil der eingangs genannten Art dahingehend zu verbessern, dass es mit geringem Aufwand und somit mit geringen Kosten produzierbar ist. Entsprechend ist es Aufgabe der Erfindung ein Verfahren zur Herstellung eines solchen Mikroventils bereitzustellen, welches kostengünstiger und somit für die Massenfertigung von Einmal-Produkten geeignet ist.

Die Aufgabe wird durch ein Mikroventil mit den Merkmalen des Anspruches 1, ein Probenaufbereitunschip mit den Merkmalen des Anspruches 6 sowie durch ein Verfahren mit den Merkmalen des Anspruches 7 gelöst. Vorteilhafte Weiterbildungen der Erfindung sind Gegenstand der Unteransprüche.

Bei dem erfindungsgemäßen Mikroventil ist vorgesehen, dass der Ventilkörper mittels eines mit dem Substrat stoffschlüssig verbundenen Andrückrings mit seiner Dichtfläche gegen die Dichtfläche des Substrats fluiddicht angedrückt wird und dass der Andrückring und/oder der Ventilkörper zumindest teilelastisch ist, wobei der Ventilkörper einen formstabilen Teil und eine Elastomerdichtung aufweist, an der die Dichtfläche ausgebildet ist, wobei eine Andrückkraft von dem Andrückring über den formstabilen Teil auf die Elastomerdichtung wirkt und wobei der formstabile Teil zusammen mit der Elastomerdichtung im Zweikomponenten-Spritzguss hergestellt ist.

Das erfindungsgemäße Verfahren zur Herstellung des Mikroventils in einem Mikrofluidiksystem, insbesondere in einem Lab-On-a-Chip-System, sieht vor, dass ein Ventilkörper mit einer Dichtfläche auf eine Dichtfläche eines Substrats aufgelegt, der Ventilkörper mittels eines Andrückrings mit seiner Dichtfläche gegen die Dichtfläche des Substrats fluiddicht angedrückt und der Andrückring mit dem Substrat stoffschlüssig verbunden wird.

Während bislang nur solche Ventilanordnungen bekannt sind, die aus wenigstens sechs Einzelteilen zusammengesetzt sind und in einer entsprechenden Anzahl von Einzelschritten zusammengefügt werden müssen, sind für das erfindungsgemäße Mikroventil nur noch drei Bauteile vorgesehen, nämlich das Substrat, der Ventilkörper und der Andrückring. Diese drei Elemente werden in einem einfachen Arbeitsgang zusammengefügt, in dem diese aufeinander gestapelt und durch Stoffschluss zwischen dem Andrückring und dem Substrat fixiert werden. Hierbei ersetzen der Andrückring und/oder der Ventilkörper funktional die Feder. Der Andrückring, welcher den Ventilkörper auf seiner der Dichtfläche abgewandten Seite gegenüber dem Substrat abstützt, ersetzt funktional ferner das fertigungstechnisch sehr viel aufwendigere Gehäuse. Der Andrückring kann als ein einfaches Spritzgussteil, oder ein kunststoffumspritztes Metall- bzw. Stanzteil (z.B. aus Federblech) hergestellt sein. Auch kann der Ventilkörper als einfaches, beispielsweise scheibenförmiges Bauteil in einem oder zumindest wenigen Arbeitsschritten hergestellt werden. Bei dem erfindungsgemäßen Mikroventil wird auf die Verwendung einer Feder zur Erzeugung der Andrückkraft völlig verzichtet. Die Erfindung nutzt zu diesem Zweck die (Teil-)Elastizität des Ventilkörpers und/oder des Andrückrings. Hierzu wird eine geeignete Materialwahl für den Ventilkörper und/oder den Andrückring unter Berücksichtigung der jeweiligen Bauteilgeometrie zu treffen sein, so dass eine hinreichende Elastizität und damit Andrückkraft zur Abdichtung gewährleistet ist.

Aufgrund der Elastomerdichtung ist der Ventilkörper druckelastisch ausgebildet. Zusätzlich kann der Andrückring zumindest abschnittsweise biegeelastisch ausgebildet sein.

Als besonders geeignete Materialien für die Elastomerverdichtung erweisen sich thermoplastische Elastomere, Silikone, Fluorelastomere wie beispielsweise Viton®, Ethylen-Propylen-Dien-Kautschuk (Gummi), Styrol-Butadien-Kautschuk (SBR), Ethylen-Propylen-Kautschuk (EPM) oder Nitrilkautschuk.

Der biegeelastische Andrückring lässt sich vorzugsweise dadurch erzielen, dass der Andrückring aus einem spritzgegossenen, teilelastischen Kunststoff oder aus kunststoffumspritztem Federstahl besteht. Als besonders geeignete Kunststoffe erweisen sich Thermoplaste und Duroplaste, insbesondere Acrylnitril-Butadien-Styrol-Copolymerisat (ABS), Polyoxymethylen (POM), Polyetherketone (PEEK).

Der formstabile Teil des Ventilkörpers sorgt für eine gleichmäßige Kraftverteilung der Andrückkraft über die gesamte Dichtfläche der Elastomerdichtung, während letztere aufgrund Ihrer Elastizität komprimiert wird und eine hinreichende Abdichtung sicherstellt.

Durch den Zweikomponenten-Spritzguss sind der formstabile Teil, der aus einem formstabilen Kunststoff besteht, und die Elastomerdichtung zu einem einstückigen Ventilkörper zusammengefasst, was den Montageaufwand verringert. Auch ist die Herstellung eines Zweikomponenten-Spritzgussteils vergleichsweise kostengünstig.

Vorteilhafterweise ist der wenigstens eine Kanal in der Elastomerdichtung als Durchgangsöffnung ausgebildet.

Das Mikroventil kann vorzugsweise als Drehventil oder als Schiebeventil ausgebildet sein.

Der Stoffschluss zwischen dem Substrat und dem Andrückring wird bei dem erfindungsgemäßen Mikroventil oder der erfindungsgemäßen Abdichteinrichtung bevorzugt durch eine Schweißverbindung erzeugt. Wiederum bevorzugt werden der Andrückring und das Substrat durch Ultraschallschweißen oder durch Laserschweißen miteinander verbunden. Das Ultraschallschweißen hat dabei den Vorzug, dass die zu verbindenden Teile in definierter Lage miteinander verpresst und in genau dieser Anordnung fixiert werden.

Bei einer besonders bevorzugten Ausführungsform des Mikroventils bildet der Probenaufbereitungschip das Substrat.

Das Mikroventil ist wegen ihres einfachen Aufbaus leicht miniaturisierbar. Die funktionale Komponente Ventil kann daher mit höherer Dichte auf dem mikrofluidischen Chip angeordnet werden. Auch die beidseitige Anbringung auf einem Chip ist möglich. Es können auf diese Weise noch höhere Integrationsdichten und komplexere Kanalstrukturen und damit eine verbesserte Funktionalität bei gleichem Platzbedarf auf einem Chip erreicht werden.

Das erfindungsgemäße Mikroventil ist insbesondere kombiniert mit eingesenktem Sitz vollständig in dem Probenaufbereitungschip integrierbar, wenn der Ventilsitz in Form einer Ausnehmung so tief in den Probenaufbereitungschip eingearbeitet ist, dass der Ventilkörper vollständig in den Aufbereitungschip eingelassen werden kann. Ferner kann eine Senkung oder Ausnehmung für den Andrückring in dem Probenaufbereitungschip vorgesehen sein, die einen bündigen Abschluss des Andrückringes mit der Oberfläche des Probenaufbereitungschips erlaubt. Hierdurch wird die Integrationsdichte der funktionalen Komponenten nochmals erhöht und der Chip behält eine flache Bauform auch bei beidseitiger Anbringung der funktionalen Komponente Ventil.

Weitere Aufgaben, Merkmale und Vorteile der Erfindung werden nachfolgend anhand von Ausführungsbeispielen mit Hilfe der Zeichnungen näher erläutert. Es zeigen:
- Figur 1: ein Mikroventil bekannter Bauart;
- Figur 2: einen Probenaufbereitungschip mit dem erfindungsgemäßen Ventil in drei Ansichten;
- Figur 3: drei Schnittdarstellungen einer ersten Ausführungsform des erfindungsgemäßen Mikroventils;
- Figur 4: drei Schnittdarstellungen einer zweiten Ausführungsform des erfindungsgemäßen Mikroventils und
- Figur 5: drei Schnittdarstellungen einer dritten Ausführungsform des erfindungsgemäßen Mikroventils.

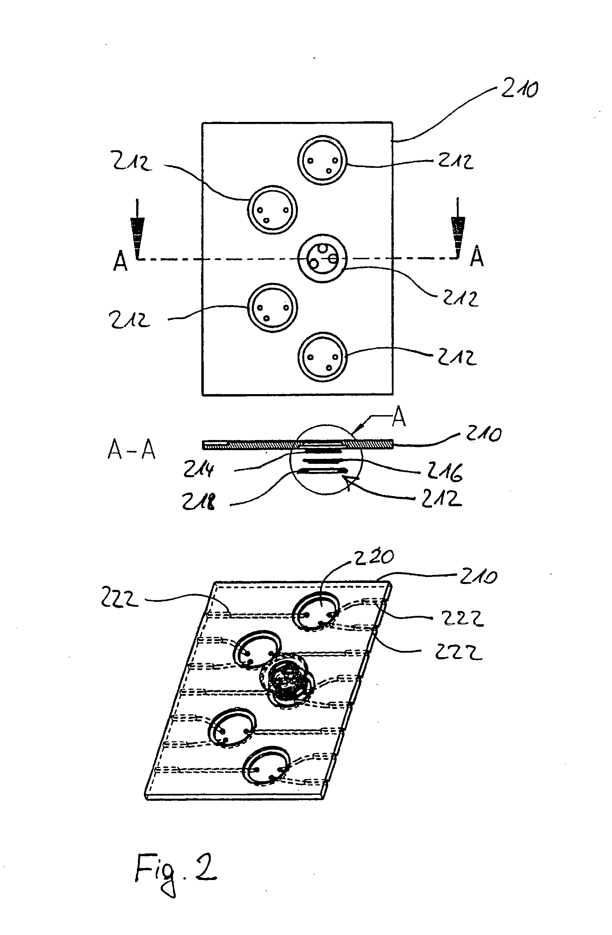

In Figur 2 ist ein erfindungsgemäßer Probenaufbereitungschip 210 in drei Ansichten dargestellt, welcher zugleich das Substrat für fünf Mikroventile 212 der erfindungsgemäßen Art bildet. Die Mikroventile 212 sind als Drehventile ausgestaltet. Sie weisen in dieser Ausführungsform eine Elastomerdichtung 214 und einen formstabilen Teil 216 auf, welche zusammen den Ventilkörper bilden. Der Ventilkörper wird jeweils mittels eines Andrückrings 218 gegen eine Grund- und Dichtfläche 220 in dem Ventilsitz im Substrat 210 angedrückt. Der Ventilsitz ist als abgestufte zylindrische Einsenkung in dem Substrat 210 ausgebildet. Die tiefere Stufe der Einsenkung bildet den eigentlichen Ventilsitz mit der Dichtfläche 220. Die flachere Einsenkung mit größerem Durchmesser bildet den Sitz für den Andrückring 212, so dass der gesamte Einbau bestehend aus Ventilkörper und Andrückring bündig mit der Oberseite des Substrats 210 abschließt. Im unteren Teil der Figur 2 ist zu erkennen, dass in dem Substrat 210 Fluidleitungen 222 verlaufen, welche in den Ventilsitz im Allgemeinen und in dem konkret gezeigten Beispiel in die Dichtfläche 220 des Ventilsitzes münden. Die Funktion des Ventilkörpers ist es, diese Mündungen wahlweise mit einander zu verbinden bzw. voneinander zu trennen. Zu diesem Zweck sind in dem Ventilkörper, bei der gezeigten Ausführungsform zumindest in der Elastomerdichtung 214 wenigstens ein oder mehrere Kanäle vorgesehen, die bei entsprechender Stellung des Ventils beispielsweise mit keiner, einer, zwei oder allen drei Mündungen kommunizieren.

Das in Figur 2 gezeigte Ausführungsbeispiel ist nur exemplarisch zu verstehen. Selbstverständlich umfasst die Erfindung auch solche Ventile, die mehr oder weniger als drei Mündungen aufweisen. Insbesondere sind auch solche Abdichteinrichtungen umfasst, die nur eine einzige Mündung oder Kavität im Bereich der Dichtfläche aufweisen. Abweichend von der gezeigten Ausführungsform können die Leitungen 222 beispielsweise auch seitlich (radial im Bezug auf die Ventilachse) in den Ventilsitz münden.

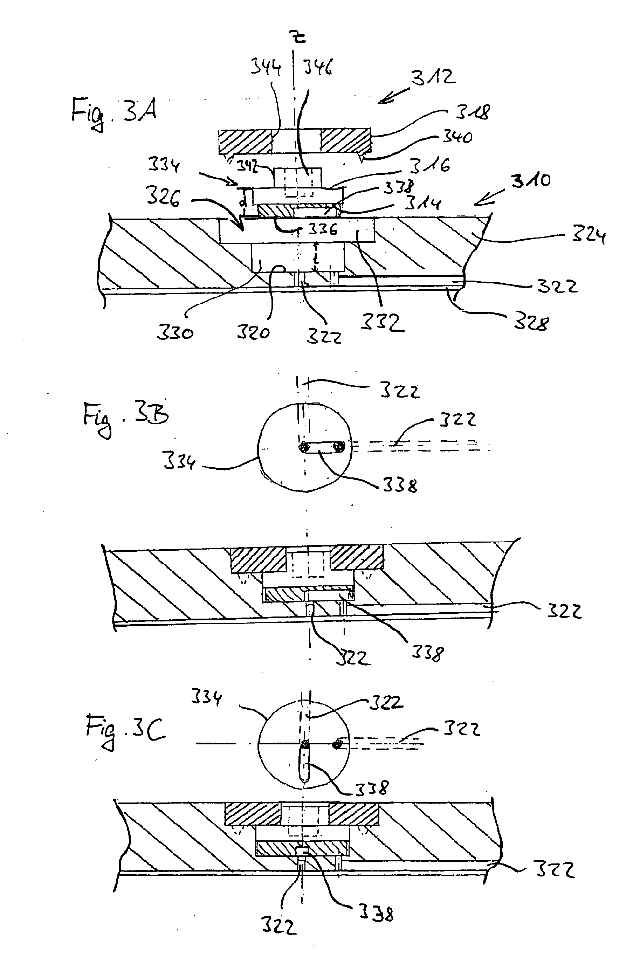

Die Figuren 3A - 3C zeigen in vergrößerter Darstellung einen Schnitt durch ein Ausführungsbeispiel des erfindungsgemäßen Mikroventils und zwar der Reihe nach in Explosionsdarstellung (Figur 3A), im zusammengebauten Zustand in einer ersten Ventilstellung (Figur 3B) und im zusammengebauten Zustand in einer zweiten Ventilstellung (Figur 3C). Ferner sind in den Teilfiguren 3B und 3C jeweils noch die Ventilstellungen in der Draufsicht illustriert.

Der Probenaufbereitungschip 310 ist nur ausschnittsweise dargestellt. Er besteht aus einer massiveren Trägerplatte 324, in welcher der Ventilsitz 326 von der Oberseite sowie Fluidleitungen 322 von der Unterseite eingearbeitet sind. Der Probenaufbereitungschip 310 ist ferner von der Unterseite mit einer Folie 328 verschlossen.

Der Ventilsitz 326 ist in Form einer zweistufigen Flachbohrung in die Trägerplatte 324 eingelassen. Die untere Stufe 330 bildet den eigentlichen Ventilsitz mit der Grund- und Dichtfläche 320. Die obere Stufe 332 bildet die Aufnahme für den Andrückring 318.

Der Ventilkörper 334 ist wie zuvor beschrieben aus einem formstabilen Teil 316 und einer Elastomerdichtung 314 zusammengesetzt Die Elastomerdichtung 314 weist auf ihrer Unterseite eine Dichtfläche 336 auf, mit der sie im montierten Zustand auf der Dichtfläche 320 des Substrats 310 bzw. der Trägerplatte 324 aufliegt. In der Elastomerdichtung 314 ist ein Kanal 338 zur wahlweisen Verbindung oder Trennung der Fluidleitungen 322 je nach Ventilstellung vorgesehen. In Figur 3B ist die horizontale Ventilstellung dargestellt, in der die Fluidleitungen 322 durch den Kanal 338 mit einander verbunden sind, in Figur 3C ist die vertikale oder Sperrstellung des Ventils dargestellt, in der die Fluidleitungen 322 nicht durch den Kanal 338 miteinander verbunden sind. Der Kanal 338 ist bei dieser Ausführungsform vollständig in der Elastomerdichtung 314 als Vertiefung ausgebildet. Der formstabile Teil 316 des Ventilkörpers 334 ist auf seiner Unterseite flach und kommt nicht mit dem Fluid in Kontakt.

Die Elastomerdichtung 314 stellt die notwendige Elastizität und damit Kompressibilität des Ventilköpers 334 bereit, damit dieser hinreichend stark mittels des Andrückrings 318 im montierten Zustand gegen die Dichtfläche 320 angedrückt werden kann, so dass die Kontaktflächen 336, 320 fluiddicht aufeinander liegen. Andererseits sollte der Andruck nicht so stark sein, dass die resultierende Reibung zwischen den beiden Kontaktflächen eine Drehung des Ventilkörpers 334 unter vertretbarem Kraftaufwand unmöglich macht. Letzteres kann durch ein entsprechend einzustellendes Übermaß der Dicke d des Ventilkörpers im Vergleich zu der Tiefe t des eigentlichen Ventilsitzes 330 erreicht werden.

Der erfindungsgemäße Stoffschluss zwischen dem Andrückring 318 und dem Substrat 310 bzw. der Trägerplatte 324 wird bei diesem Ausführungsbeispiel durch Ultraschallschweißen erzielt. Zu diesem Zweck weist der Andrückring 318 auf seiner Unterseite einen ringförmigen Ansatz 340 auf, dessen Material beim Ultraschallverschweißen mit dem Material der Trägerplatte 324 eine stoffschlüssige Verbindung eingeht.

Der Ventilkörper 334 und genauer der formstabile Teil 316 des Ventilkörpers 334 weist an seinem oberen Ende einen zylindrischen Ansatz 342 auf, der in eine korrespondierende Bohrung 344 in dem Andrückring 318 eingeführt wird. Durch die Abmessungen des Ansatzes 342 im Verhältnis zu dem äußeren Durchmesser des Ventilkörpers 334 und somit durch die obere Ringfläche des formstabilen Teils 316 wird unter Berücksichtigung der Materialzusammensetzung die Reibkraft zwischen dem Ventilkörper 334 und den Andrückring 318 bestimmt. In dem zylindrischen Ansatz 342 ist eine Ausnehmung 346 vorgesehen, welche als Handhabe für die Betätigung des Drehventils 312 dient. Die Ausnehmung kann beispielsweise in Form eines Innensechskants oder dergleichen zur Betätigung mittels eines entsprechenden Schlüssels ausgebildet sein.

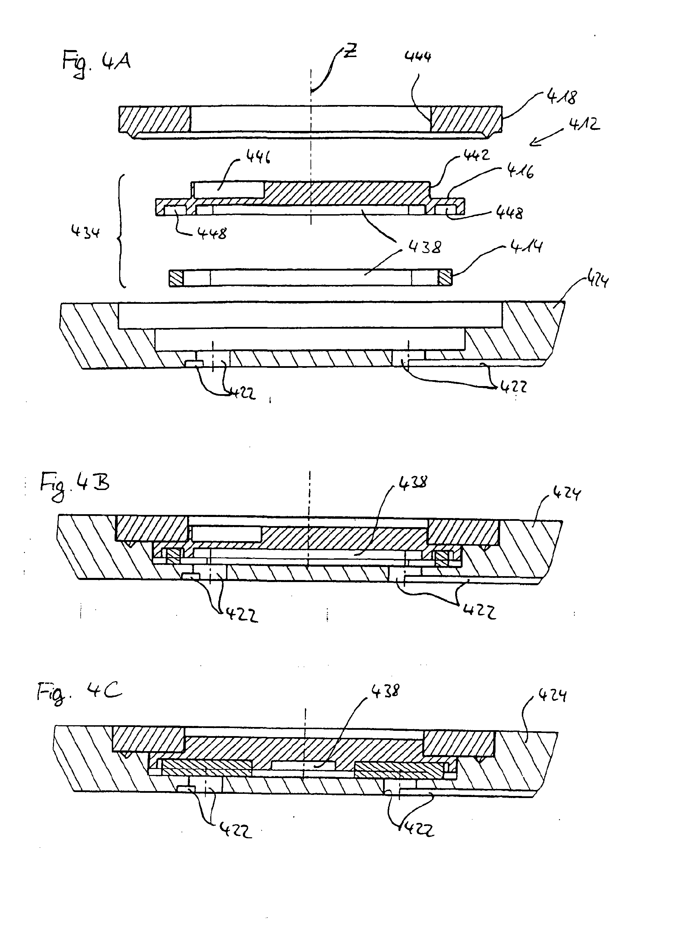

In den Figuren 4A bis C ist ein zweites Ausführungsbeispiel des erfindungsgemäßen Mikroventils gezeigt, welches sich im wesentlichen durch eine andere Ausgestaltung des Ventilkörpers 434 dahingehend unterscheidet, dass dieser zwar auch zweigeteilt aus einem formstabilen Teil 416 und einer Elastomerdichtung 414 zusammengesetzt ist, aber dass die Elastomerdichtung 414 eine geringere Bauhöhe aufweist und der Kanal 438 als Durchgangsöffnung in der Elastomerdichtung 414 ausgebildet ist. Der Kanal 438 erstreckt sich zudem teilweise in den formstabilen Teil 416, um insgesamt einen ausreichenden Querschnitt zur Verbindung der zwei Fluidleitungen 422 in dem Substrat (dargestellt ist in den Figuren 4 nur die massive Trägerplatte 424) bereitzustellen.

Ein weiterer Unterschied hinsichtlich des Ventilkörpers 434 besteht darin, dass der formstabile Teil 416 auf seiner Unterseite ferner eine Ausnehmung 448 zur teilweisen Aufnahme der Elastomerdichtung 414 aufweist. Dies erweist sich in Fällen als vorteilhaft, in denen die Elastomerdichtung 414 jedenfalls abschnittsweise nur einen geringen Querschnitt aufweist, wie er in den Figuren 4A und 4B abgebildet ist. Die Ausnehmung 448 dient hier als Führung bzw. zur Stabilisierung der Elastomerdichtung 414, welche aufgrund ihrer Elastizität andernfalls bei einer Betätigung des Ventils verschoben, verkantet oder gar zerstört werden könnte.

Der formstabile Teil 414 weist abermals einen zylindrischen Ansatz 442 auf, der in eine entsprechende zentrale Bohrung 444 in dem Andrückring 418 passt. Der Ansatz 442 weist in diesem Ausführungsbeispiel einen größeren Durchmesser und auf seiner Oberseite eine Ausnehmung 446 auf, die exzentrisch zu der Zentrumsachse Z angeordnet ist. Die Ausnehmung 446 dient wie in dem Beispiel gemäß Figur 3 der Betätigung des Drehventils 412, kann jedoch in diesem Fall als Griffmulde beispielsweise mit dem Finger betätigt werden.

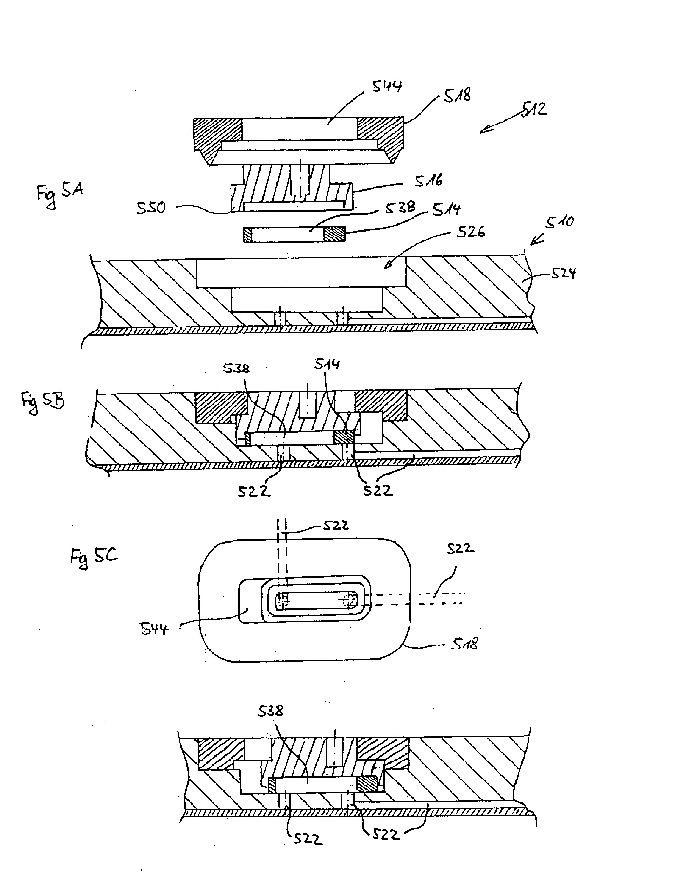

Die Figuren 5A bis 5C zeigen ein weiteres Ausführungsbeispiel des erfindungsgemäßen Mikroventils, welches im Gegensatz zu den beiden vorherigen nicht als Dreh-, sondern als Schiebeventil 512 ausgebildet ist. Dementsprechend sind alle Bauteile des Ventils 512, nämlich der Andrückring 518, der formstabile Teil 516 des Ventilkörpers 534, die Elastomerdichtung 514 wie auch der Ventilsitz 526 in der Trägerplatte 524 des Substrats 510 für eine translatorische Bewegung des Ventilkörpers 534 ausgelegt.

Zwar ist auch hier ein Kanal 538 als Durchgangsöffnung in der Elastomerdichtung 514 ausgebildet. Im Unterschied zu dem Ausführungsbeispiel gemäß Figur 4 erstreckt sich der Kanal 538 aber nicht in den formstabilen Teil 516. Die Unterseite des formstabilen Teils 516 des Ventilkörpers weist lediglich einen außenumfängiichen Rand 550 zur Stabilisierung oder Führung der Elastomerdichtung 514 auf. Auf einen innenumfänglichen Rand, der zugleich eine Begrenzung des Kanals 538 darstellen würde, wird in diesem Fall verzichtet.

Die Elastomerdichtung 514 verschließt in der in Figur 5B gezeigten Ventilstellung mit Ihrer Dichtfläche 536 die rechte Fluidleitung 522. Nur die linke Fluidleitung 522 hat somit eine Verbindung zu dem Kanal 538. Eine Kommunikation der beiden Fluidleitungen findet nicht statt. Dem gegenüber sind in der Ventilstellung gemäß Figur 5C die beiden Fluidleitungen 522 durch den Kanal 538 mit einander verbunden.

Der Andrückring 518 weist, wie in Figur 5C zu erkennen ist, eine rechteckige Außenkontur mit abgerundeten Ecken auf. Wahlweise kann der Andrückring aber auch bei einem Schiebeventil eine runde Außenkontur haben, wobei die lang gestreckte nutförmige Ausnehmung 544 vorzugsweise in Betätigungsrichtung parallele Seiten zur verbesserten Führung des Ventilkopfes 534 aufweist.

Hinsichtlich der Bereitstellung der Andrückkraft sind alle gezeigten Ausführungsbeispiele insoweit identisch, als die notwendige Elastizität jeweils nur von dem Ventilkörper und nicht von dem Andrückring bereitgestellt wird. Bei den Ventilkörpem gemäß der Figuren 3, 4 und 5 ist die Elastizität nur durch einen Teil der Ventilkörper, nämlich die Elastomerdichtung, bereitgestellt wird, während der formstabile Teil und der Andrückring in allen drei Ausführungsbeispielen so steif sind, dass sie unter der Andrückkraft nicht nennenswert nachgeben. Durch den formstabilen Teil der Ventilkörper ist sichergestellt, dass sich die Andrückkraft über die Elastomer-dichtung jeweils gleichmäßig verteilt.

Abweichend von den gezeigten Ausführungsbeispielen kann jedoch ein Teil der Elastizität auch durch den Andrückring bereitgestellt werden, indem dieser entsprechend der Elastizitätserfordernisse hinsichtlich seines Materials uns seiner Geometrie so ausgebildet ist, dass er unter Aufbringung einer Kraft teilweise nachgeben kann. Die elastizitätsbedingte Rückstellkraft kann sich somit auf den Ventilkörper bzw. das Abdichtelement und den Andrückring verteilen.

In allen gezeigten Ausführungsbeispielen ist eine Ausführungsform gewählt, bei der der Stoffschluss zwischen dem Andrückring und der Trägerplatte des Substrats mittels Ultraschallschweißen erzeugt wird. Die Erfindung bezieht sich aber ebenso auf Ausführungsformen, bei denen der Stoffschluss beispielsweise durch Kleben, Lösungsmittelkleben, Laserschweißen oder andere Formen des Schweißens erzielt wird.

### Bezugszeichenliste

- 10: Substrat / Probenaufbereitungschip
- 12: Elastomerdichtung
- 14: Dichtfläche
- 16: Dichtfläche
- 18: Ventilzylinder
- 20: Druckfeder
- 22: Ventilgehäuse
- 24: Schraube / Schraubverbindung

- 210: Substrat / Probenaufbereitungschip
- 212: Mikroventil
- 214: Elastomerdichtung
- 216: formstabiler Teil des Ventilkörpers
- 218: Andrückring
- 220: Dichtfläche
- 222: (Fluid-)Leitung

- 310: Substrat / Probenaufbereitungschip
- 312: Mikroventil
- 314: Elastomerdichtung
- 316: formstabiler Teil des Ventilkörpers
- 318: Andrückring
- 320: Dichtfläche
- 322: (Fluid-)Leitung
- 324: Trägerplatte
- 326: Ventilsitz
- 328: Folie
- 330: untere Stufe, eigentlicher Ventilsitz
- 332: obere Stufe, Aufnahme
- 334: Ventilkörper
- 336: Dichtfläche
- 338: Kanal
- 340: ringförmiger Ansatz
- 342: zylindrischer Ansatz
- 344: Bohrung
- 346: Ausnehmung

- 410: Substrat / Probenaufbereitungschip
- 412: Mikroventil
- 414: Elastomerdichtung
- 416: formstabiler Teil des Ventilkörpers
- 418: Andrückring
- 422: (Fluid-)Leitung
- 424: Trägerplatte
- 434: Ventilkörper
- 438: Kanal
- 442: zylindrischer Ansatz
- 444: Bohrung
- 446: Ausnehmung
- 448: Ausnehmung / Aufnahme

- 510: Substrat / Probenaufbereitungschip
- 512: Mikroventil
- 514: Elastomerdichtung
- 516: formstabiler Teil des Ventilkörpers
- 518: Andrückring
- 522: (Fluid-)Leitung
- 524: Trägerplatte
- 526: Ventilsitz
- 534: Ventilkörper
- 536: Dichtfläche
- 538: Kanal
- 544: Bohrung
- 550: außenumfänglicher Rand

- Z: Zentrumsachse

## Patentansprüche

1. Mikroventil (212, 312, 412, 512) zur Steuerung von Fluidströmen in einem Mikrofluidiksystem, insbesondere in einem Lab-On-a- Chip-System, mit einem Substrat (10, 210, 310, 410, 510), das eine Dichtfläche (16, 220, 320) aufweist, und einem relativ zu dem Substrat (10, 210, 310, 410, 510) beweglich angeordneten Ventilkörper (334, 434, 534), der eine Dichtfläche (14, 336, 536) aufweist und wenigstens einen Kanal (338, 438, 538) zur wahlweisen Verbindung und/oder Trennung von Fluidleitungen (222, 322, 422, 522) in dem Substrat (10, 210, 310, 410, 510) definiert, wobei die Dichtfläche (14, 336, 536) des Ventilkörpers (334, 434, 534) und die Dichtfläche (16, 220, 320) des Substrats (10, 210, 310, 410, 510) fluiddicht aneinander anliegen, **dadurch gekennzeichnet, dass** der Ventilkörper (334, 434, 534) mittels eines mit dem Substrat (10, 210, 310, 410, 510) stoffschlüssig verbundenen Andrückrings (218, 318, 418, 518) mit seiner Dichtfläche (14, 336, 536) gegen die Dichtfläche (16, 220, 320) des Substrats (10, 210, 310, 410, 510) angedrückt wird und dass der Andrückring (218, 318, 418, 518) und/oder der Ventilkörper (434, 534) zumindest teilelastisch ist und der Ventilkörper (334, 434, 534) einen formstabilen Teil (216, 316, 416, 516) und eine Elastomerdichtung (12, 214, 314, 414, 514) aufweist, an der die Dichtfläche (14, 336, 536) ausgebildet ist, wobei der formstabile Teil (216, 316, 416, 516) zusammen mit der Elastomerdichtung (12, 214, 314, 414, 514) im zwei-Komponenten-Spritzguss hergestellt ist und wobei eine Andrückkraft von dem Andrückring (218, 318, 418, 518) über den formstabilen Teil (216, 316, 416, 516) auf die Elastomerdichtung (12, 214, 314, 414, 514) wirkt.

2. Mikroventil (212, 312, 412, 512) nach Anspruch 1, **dadurch gekennzeichnet, dass** der wenigstens eine Kanal (338, 438, 538) in der Elastomerdichtung (12, 214, 314, 414, 514) als Durchgangsöffnung ausgebildet ist.

3. Mikroventil (212, 312, 412, 512) nach einem der vorstehenden Ansprüche, **dadurch gekennzeichnet, dass** der Andrückring (218, 318, 418, 518) biegeelastisch ausgebildet ist.

4. Mikroventil (212, 312, 412, 512) nach einem der vorstehenden Ansprüche, **dadurch gekennzeichnet, dass** in das Substrat (10, 210, 310, 410, 510 ) ein Ventilsitz (326, 330, 526) eingesenkt ist.

5. Mikroventil (212, 312, 412, 512) nach einem der vorstehenden Ansprüche, **dadurch gekennzeichnet, dass** der Andrückring (218, 318, 418, 518) und das Substrat (10, 210, 310, 410, 510) miteinander verschweißt sind.

6. Probenaufbereitungschip (10, 210, 310, 410, 510) mit einem Mikroventil (212, 312, 412, 512) nach einem der vorstehenden Ansprüche, bei dem der Probenaufbereitungschip (10, 210, 310, 410, 510) das Substrat (10, 210, 310, 410, 510) bildet.

7. Verfahren zur Herstellung eines Mikroventils (212, 312, 412, 512) in einem Mikrofluidiksystem, insbesondere in einem Lab-On-a-Chip-System, nach einem der Ansprüche 1 bis 5, bei dem ein Ventilkörper (334, 434, 534) mit einer Dichtfläche (14, 336, 536) auf eine Dichtfläche (16, 220, 320) eines Substrats (10, 210, 310, 410, 510) aufgelegt, der Ventilkörper (334, 434, 534) mittels eines Andrückrings (218, 318, 418, 518) mit seiner Dichtfläche (14, 336, 536) gegen die Dichtfläche (16, 220, 320) des Substrats (10, 210, 310, 410, 510) fluiddicht angedrückt und der Andrückring (218, 318, 418, 518) mit dem Substrat (10, 210, 310, 410, 510) stoffschlüssig verbunden wird.

8. Verfahren nach Anspruch 7, **dadurch gekennzeichnet, dass** der Andrückring (218, 318, 418, 518) mit dem Substrat (10, 210, 310, 410, 510) verschweißt wird.

9. Verfahren nach Anspruch 8, **dadurch gekennzeichnet, dass** der Andrückring (218, 318, 418, 518) mit dem Substrat (10, 210, 310, 410, 510) durch Ultraschallschweißen verbunden wird.

10. Verfahren nach Anspruch 8, **dadurch gekennzeichnet, dass** der Andrückring (218, 318, 418, 518) mit dem Substrat (10, 210, 310, 410, 510) durch Laserschweißen verbunden wird.

## Claims

1. Micro-valve (212, 312, 412, 512) for controlling fluid flows in a microfluidic system, in particular in a lab-on-a-chip system, with a substrate (10, 210, 310, 410, 510) which has a sealing surface (16, 220, 320), and a valve body (334, 434, 534) arranged movably relative to the substrate (10, 210, 310, 410, 510), which valve body (334, 434, 534) has a sealing surface (14, 336, 536) and defines at least one channel (338, 438, 538) for the optional connection and/or disconnection of fluid lines (222, 322, 422, 522) in the substrate (10, 210, 310, 410, 510), wherein the sealing surface (14, 336, 536) of the valve body (334, 434, 534) and the sealing surface (16, 220, 320) of the substrate (10, 210, 310, 410, 510) bear against one another in a fluid-tight manner, **characterized in that** the valve body (334, 434, 534) is pressed with the sealing surface (14, 336, 536) thereof against the sealing surface (16, 220, 320) of the substrate (10, 210, 310, 410, 510) by means of a pressure-exerting ring (218, 318, 418, 518) cohesively connected to the substrate (10, 210, 310, 410, 510), and **in that** the pressure-exerting ring (218, 318, 418, 518) and/or the valve body (434, 534) is at least partially elastic and the valve body (334, 434, 534) has a dimensionally stable part (216, 316, 416, 516) and an elastomer seal (12, 214, 314, 414, 514) on which the sealing surface (14, 336, 536) is formed, wherein the dimensionally stable part (216, 316, 416, 516) is produced together with the elastomer seal (12, 214, 314, 414, 514) in two-component injection moulding, and wherein a pressing force from the pressure-exerting ring (218, 318, 418, 518) acts on the elastomer seal (12, 214, 314, 414, 514) via the dimensionally stable part (216, 316, 416, 516).

2. Micro-valve (212, 312, 412, 512) according to claim 1, **characterized in that** the at least one channel (338, 438, 538) is formed in the elastomer seal (12, 214, 314, 414, 514) as a through-opening.

3. Micro-valve (212, 312, 412, 512) according to one of the preceding claims, **characterized in that** the pressure-exerting ring (218, 318, 418, 518) is designed to be flexible.

4. Micro-valve (212, 312, 412, 512) according to one of the preceding claims, **characterized in that** a valve seat (326, 330, 526) is sunk into the substrate (10, 210, 310, 410, 510).

5. Micro-valve (212, 312, 412, 512) according to one of the preceding claims, **characterized in that** the pressure-exerting ring (218, 318, 418, 518) and the substrate (10, 210, 310, 410, 510) are welded together.

6. Sample processing chip (10, 210, 310, 410, 510) with a micro-valve (212, 312, 412, 512) according to one of the preceding claims, in which the sample processing chip (10, 210, 310, 410, 510) forms the substrate (10, 210, 310, 410, 510).

7. Method for the production of a micro-valve (212, 312, 412, 512) in a microfluidic system, in particular in a lab-on-a-chip system, according to one of claims 1 to 5, in which a valve body (334, 434, 534) with a sealing surface (14, 336, 536) is rested upon a sealing surface (16, 220, 320) of a substrate (10, 210, 310, 410, 510), the valve body (334, 434, 534) is pressed with the sealing surface (14, 336, 536) thereof in a fluid-tight manner against the sealing surface (16, 220, 320) of the substrate (10, 210, 310, 410, 510) by means of a pressure-exerting ring (218, 318, 418, 518) and the pressure-exerting ring (218, 318, 418, 518) is cohesively connected to the substrate (10, 210, 310, 410, 510).

8. Method according to claim 7, **characterized in that** the pressure-exerting ring (218, 318, 418, 518) is welded to the substrate (10, 210, 310, 410, 510).

9. Method according to claim 8, **characterized in that** the pressure-exerting ring (218, 318, 418, 518) is connected to the substrate (10, 210, 310, 410, 510) through ultrasonic welding.

10. Method according to claim 8, **characterized in that** the pressure-exerting ring (218, 318, 418, 518) is connected to the substrate (10, 210, 310, 410, 510) through laser welding.

## Revendications

1. Micro-soupape (212, 312, 412, 512) pour le contrôle d'écoulement de fluides dans un système à micro-fluides, plus particulièrement un système de laboratoire sur puce, avec un substrat (10, 210, 310, 410, 510) qui comprend une surface d'étanchéité (16, 220, 320), et un corps de soupape (334, 434, 534) mobile par rapport au substrat (10, 210, 310, 410, 510), qui comprend une surface d'étanchéité (14, 336, 536) et délimite au moins un canal (338, 438, 538) pour la liaison et/ou la séparation sélective de conduites de fluides (222, 322, 422, 522) dans le substrat (10, 210, 310, 410, 510), la surface d'étanchéité (14, 336, 536) du corps de soupape (334, 434, 534) et la surface d'étanchéité (16, 220, 320) du substrat (10, 210, 310, 410, 510) s'appuyant l'une contre l'autre de manière étanche aux fluides, **caractérisée en ce que** le corps de soupape (334, 434, 534) est comprimé, à l'aide d'une bague de compression (218, 318, 418, 518) reliée par liaison de matière au substrat (10, 210, 310, 410, 510), avec sa surface d'étanchéité (14, 336, 536) contre la surface d'étanchéité (16, 220, 320) du substrat (10, 210, 310, 410, 510) et **en ce que** la bague de compression (218, 318, 418, 518) et/ou le corps de soupape (434, 534) est au moins partiellement élastique et le corps de soupape (334, 434, 534) comprend une partie rigide (216, 316, 416, 516) et un joint d'étanchéité en élastomère (12, 214, 314, 414, 514), sur lequel est formée la surface d'étanchéité (14, 336, 536), la partie rigide (216, 316, 416, 516) étant réalisée en même temps que le joint d'étanchéité en élastomère (12, 214, 314, 414, 514) à l'aide d'une injection sous pression à deux composants et une force de compression de la bague de compression (218, 318, 418, 518) agissant, par l'intermédiaire de la partie rigide (216, 316, 416, 516), sur le joint d'étanchéité en élastomère (12, 214, 314, 414, 514).

2. Micro-soupape (212, 312, 412, 512) selon la revendication 1, **caractérisée en ce que** l'au moins un canal (338, 438, 538) est formé dans le joint d'étanchéité en élastomère (12, 214, 314, 414, 514) comme une ouverture de passage.

3. Micro-soupape (212, 312, 412, 512) selon l'une des revendications précédentes, **caractérisée en ce que** la bague de compression (218, 318, 418, 518) est conçue de manière élastique en flexion.

4. Micro-soupape (212, 312, 412, 512) selon l'une des revendications précédentes, **caractérisée en ce qu'**un siège de soupape (326, 330, 526) est creusé dans le substrat (10, 210, 310, 410, 510).

5. Micro-soupape (212, 312, 412, 512) selon l'une des revendications précédentes, **caractérisée en ce que** la bague de compression (218, 318, 418, 518) et le substrat (10, 210, 310, 410, 510) sont soudés ensemble.

6. Puce de préparation d'échantillon (10, 210, 310, 410, 510) avec une micro-soupape (212, 312, 412, 512) selon l'une des revendications précédentes, dans laquelle la puce de préparation d'échantillon (10, 210, 310, 410, 510) constitue le substrat (10, 210, 310, 410, 510).

7. Procédé de fabrication d'une micro-soupape (212, 312, 412, 512) dans un système de micro-fluides, plus particulièrement dans système de laboratoire sur puce, selon l'une des revendications 1 à 5, dans lequel un corps de soupape (334, 434, 534) avec une surface d'étanchéité (14, 336, 536) est posé sur une surface d'étanchéité (16, 220, 320) d'un substrat (10, 210, 310, 410, 510), le corps de soupape (334, 434, 534) est comprimé de manière étanche aux fluides, à l'aide d'une bague de compression (218, 318, 418, 518) avec sa surface d'étanchéité (14, 336, 536) contre la surface d'étanchéité (16, 220, 320) du substrat (10, 210, 310, 410, 510) et la bague de compression (218, 318, 418, 518) est reliée par liaison de matière avec le substrat (10, 210, 310, 410, 510).

8. Procédé selon la revendication 7, **caractérisé en ce que** la bague de compression (218, 318, 418, 518) est soudée avec le substrat (10, 210, 310, 410, 510).

9. Procédé selon la revendication 8, **caractérisé en ce que** la bague de compression (218, 318, 418, 518) est reliée au substrat (10, 210, 310, 410, 510) par soudure aux ultrasons.

10. Procédé selon la revendication 8, **caractérisé en ce que** la bague de compression (218, 318, 418, 518) est reliée au substrat (10, 210, 310, 410, 510) par soudure au laser.
